# EUROPÄISCHE PATENTSCHRIFT

(11) **EP 2 092 458 B1**
(45) Veröffentlichungstag und Bekanntmachung des Hinweises auf die Patenterteilung: **11.05.2011**
(21) Anmeldenummer: 07846609.1
(22) Anmeldetag: 15.11.2007
(51) Int. Cl.: G06K 7/00, G06K 19/077

(54) **TRAGBARER DATENTRÄGER**
PORTABLE DATA CARRIER
SUPPORT DE DONNÉES PORTATIF

(30) Priorität: 15.11.2006 DE 102006053789
(43) Veröffentlichungstag der Anmeldung: 26.08.2009
(73) Patentinhaber: Giesecke & Devrient GmbH, 81677 München (DE)
(72) Erfinder: HARTEL, Karl Eglof, 80689 München (DE)
(74) Vertreter: Höhfeld, Jochen
(86) Internationale Anmeldenummer: PCT/EP2007/009894
(87) Internationale Veröffentlichungsnummer: WO 2008/058743

(56) Entgegenhaltungen:
- EP-A- 1 837 796
- WO-A-99/49415
- DE-A1- 19 515 713
- DE-C1- 19 523 275
- GB-A- 2 345 781
- US-A1- 2005 224 588
- US-B1- 6 840 454

## Beschreibung

Die vorliegende Erfindung betrifft ein Verfahren zum Aktivieren von Kontaktbelegungen eines Kontaktfelds eines tragbaren Datenträgers sowie einen derartigen tragbaren Datenträger.

Heutzutage werden vielfältige tragbare Datenträger verwendet, die ein Nutzer mit sich führen kann, um unterschiedliche Dienstleistungen in Anspruch zu nehmen oder Transaktionen durchzuführen. So werden beispielsweise Chipkarten oder Mobilfunkkarten eingesetzt, um durch eine entsprechende Authentisierung einen Zugang zu gesicherten Bereichen oder Dienstleistungen zu erhalten, z. B. die über ein Mobilfunknetzes bereitgestellten Applikationen eines Mobilfunkanbieters. Je nach Typ und Einsatzart eines solchen Datenträgers wird die Kommunikation zwischen dem Datenträger und einem mit diesem in Kontakt stehenden Endgerät, beispielsweise einem Telekommunikationsendgerät oder einem Bankterminal, über ein geeignetes Kommunikationsprotokoll durchgeführt. Der Datenträger steht dabei mit dem Endgerät über die physikalische Schnittstelle eines Kontaktfelds des Datenträgers in Verbindung. Für ein verwendetes Kommunikationsprotokoll ist jeweils eine individuelle Kontaktbelegung des Kontaktfelds vereinbart, deren Kontakte nicht gleichzeitig für andere Zwecke, z.B. für ein weiteres Kommunikationsprotokoll, zur Verfügung stehen.

Da die Anzahl an Kontaktstellen eines solchen Kontaktfelds und somit die möglichen unterschiedlichen Kontaktbelegungen begrenzt sind, ist auch die Möglichkeit eingeschränkt, eine parallele Kommunikation über mehrere Kommunikationsprotokolle gleichzeitig durchzuführen, da sich aufgrund der in der Regel festgelegten Kontaktbelegungen Überlappungen und insofern Kollisionen ergeben können. Über ein im Chipkartenbereich verwendetes Kontaktfeld gemäß dem ISO 7816-2 Standard mit acht Kontaktstellen C1 bis C8 werden verschiedene Kommunikationsprotokolle für eine kontaktbehaftete Kommunikation (nachfolgend als "kontaktbehaftete Kommunikationsprotokolle" bezeichnet) eingesetzt, beispielsweise das MMC-Hochgeschwindigkeitsprotokoll ("Multimedia Card"), das die Kontakte C4, C6 und C8 nutzt, oder das USB-Hochgeschwindigkeitsprotokoll ("Universial Serial Bus"), das die Kontakte C4 und C8 einsetzt (vgl. Dokumente SCPt060551 und SCPt060552 des Europäischen Instituts für Telekommunikationsnormen, ETSI).

WO 99/49415 A1 zeigt eine Chipkarte deren Kontaktbelegung je nach Protokoll umgeschaltet wird. Die in US 2005/0224588 A1 beschriebene Chipkarte verwendet zusätzlich zu dem Kontakt C7 die Kontakte C4, C6 und C8 für eine schnellere, parallele Datenübertragung. Darüber hinaus ist auch eine Unterstützung von Kommunikationsprotokollen für eine kontaktlose Kommunikation (nachfolgend als "kontaktlose Kommunikationsprotokolle" bezeichnet) wünschenswert, um parallel zur Nutzung von kontaktbehafteten Kommunikationsprotokollen gleichzeitig auch über eine Funkverbindung kommunizieren zu können. Solche kontaktbehafteten Kommunikationsprotokolle beanspruchen wiederum zusätzliche oder überlappende Kontaktbelegungen des Kontaktfelds. Hierbei besteht jedoch die Möglichkeit, dass eine technisch mögliche kontaktlose Kommunikation nicht durchgeführt werden kann, weil zumindest einige Kontakte der zugehörigen Kontaktbelegung von einer bereits aktivierten kontaktbehafteten Kommunikation blockiert werden. In diesem Zusammenhang offenbart die WO 2005/124656 A1 eine Möglichkeit, ein kontaktbehaftetes Hochgeschwindigkeitsprotokoll und ein kontaktloses Kommunikationsprotokoll mit kollidierenden Kontaktbelegungen zu betreiben. Dazu werden die an dem Datenträger anliegenden Kommunikationsprotokolle erkannt und gemäß bestimmten Prioritätsvorgaben aktiviert bzw. deaktiviert. Eine ähnliche Steuerung für einen gegebenenfalls auch parallelen Betrieb mit unterschiedlichen Kommunikationsprotokollen zeigt WO 2005/066888 A1, welches die Merkmale des Oberbegriffs von Anspruch 1 offenbart.

Demzufolge ist die Aufgabe der vorliegenden Erfindung, eine gleichzeitige Kommunikation über unterschiedliche Kommunikationsprotokolle mit einem Kontaktfeld eines tragbaren Datenträgers in flexibler Weise zu ermöglichen.

Diese Aufgabe wird erfindungsgemäß durch ein Verfahren sowie einen Datenträger mit den Merkmalen der unabhängigen Ansprüche gelöst. Die davon abhängigen Ansprüche beschreiben vorteilhafte Ausgestaltungen und Weiterbildungen der Erfindung.

Es ist ein Grundgedanke der vorliegenden Erfindung, zumindest einen, bei aktivierter erster Kontaktbelegung, noch nicht belegten Kontakt zu reservieren, wenn unterschiedliche Kontaktbelegungen für die noch nicht belegten Kontakte möglich sind.

Die Reservierung kann permanent vorgegeben sein, um bekannte Randbedingungen zu berücksichtigen. Alternativ kann die Reservierung temporär erfolgen und /oder aufgehoben werden, beispielsweise in Antwort auf empfangene, entsprechende Kommandos (RESERVE und UNRESERVE), anhand von in dem Datenträger vorgegebenen Bedingungen oder gesteuert durch eine Applikation auf dem tragbaren Datenträger. Situationsbezogen kann somit eine Reservierung ausgelöst werden.

Ein solcher tragbarer Datenträger (mit einem Kontaktfeld gemäß ISO 7816-2) umfasst eine Schnittstelleneinrichtung, die eine Kommunikation mit einem Endgerät gemäß einem kontaktlosen Kommunikationsprotokoll über eine vorgegebene Kontaktbelegung des Kontaktfelds unterstützt (nachfolgend als "Kontaktlos-Schnittstelleneinrichtung" bezeichnet), sowie zumindest eine weitere Schnittstelleneinrichtung, die eine Kommunikation mit einem Endgerät gemäß einem kontaktbehafteten Kommunikationsprotokoll über jeweils unterschiedliche Kontaktbelegungen des Kontaktfelds unterstützt (nachfolgend als "Kontakt-Schnittstelleneinrichtung" bezeichnet). Die zur Kommunikation über das kontaktlose Kommunikationsprotokoll zu aktivierende Kontaktbelegung (nachfolgend als "kontaktlose Kontaktbelegung" bezeichnet) kann sich mit zumindest einer der Kontaktbelegungen für die von dem Datenträger jeweils unterstützten kontaktbehafteten Kommunikationsprotokolle (nachfolgend als "kontaktbehaftete Kontaktbelegung" bezeichnet) überschneiden. In diesem Fall wird zumindest ein Kontakt von dem kontaktlosen Kommunikationsprotokoll und von zumindest einem kontaktbehafteten Kommunikationsprotokoll genutzt, so dass die entsprechenden Kontaktbelegungen bezüglich dieses Kontakts kollidieren.

Eine Steuereinrichtung des Datenträgers ist imstande, eine (quasi-) parallele Kommunikation über zwei verschiedene Kommunikationsprotokolle zu ermöglich, deren Kontaktbelegungen nicht kollidieren, indem die entsprechenden Schnittstelleneinrichtungen bzw. Kontaktbelegungen bei Anliegen der jeweiligen Kommunikationsprotokolle an dem Kontaktfeld zumindest zeitlich überlappend aktiviert sind bzw. sogar gleichzeitig aktiviert werden. Hierbei ist der Begriff "Kontaktbelegung eines Kommunikationsprotokolls" als diejenige individuelle Gruppe von Kontakten des Kontaktfelds zu verstehen, auf die ein Endgerät bei der Kommunikation mit dem Datenträger über das Kommunikationsprotokoll zugreift. Unter "Aktivieren einer Kontaktbelegung" wird insofern ein Aktivieren derjenigen Schnittstelleneinrichtung des Datenträgers verstanden, die auf Kontakte des Kontaktfelds zugreift, die die Kontaktbelegung bilden, die zu dem von der Schnittstelleneinrichtung unterstützten Kommunikationsprotokoll gehört.

Wenn an dem Kontaktfeld während einer Kommunikation zwischen dem Datenträger und einem Endgerät bzw. Terminal über ein erstes kontaktbehaftetes Kommunikationsprotokoll mittels einer aktivierten ersten Kontakt-Schnittstelleneinrichtung ein zweites Kommunikationsprotokoll anliegt, aktiviert die Steuereinrichtung die entsprechende zweite Schnittstelleneinrichtung, sofern es keine Kollision zwischen der Kontaktbelegung der ersten Kontakt-Schnittstelleneinrichtung bzw. des ersten kontaktbehafteten Kommunikationsprotokolls und derjenigen der zweiten Schnittstelleneinrichtung bzw. des zweiten Kommunikationsprotokolls gibt.

Jedoch prüft die Steuereinrichtung in dem Fall, dass es sich bei dem zweiten Kommunikationsprotokoll um ein kontaktbehaftetes Protokoll handelt und die entsprechende zweite Schnittstelleneinrichtung demzufolge eine Kontakt-Schnittstelleneinrichtung ist, ob deren Aktivierung dazu führen würde, dass eine Kontaktlos-Schnittstelleneinrichtung aufgrund einer Kollision der entsprechenden Kontaktbelegungen nicht mehr aktiviert werden könnte. Eine zweite Kontakt-Schnittstelleneinrichtung wird demzufolge nur aktiviert, wenn auch nach deren Aktivierung weiterhin eine Kontaktbelegung für ein kontaktloses Kommunikationsprotokoll frei bleibt und von der entsprechenden Kontaktlos-Schnittstelleneinrichtung zur Kommunikation genutzt werden kann. Der Kontaktlos-Schnittstelleneinrichtung wird also faktisch eine Priorität bzw. Bevorzugung gegenüber einer zweiten Kontakt-Schnittstelleneinrichtung eingeräumt. Dadurch wird sichergestellt, dass eine Kommunikation über ein kontaktloses Kommunikationsprotokoll nicht dadurch verhindert wird, dass mehrere kontaktbehaftete Kommunikationen eine Vielzahl von Kontaktbelegungen beanspruchen. Eine kontaktlose Kommunikation des Datenträgers ist also nur dann ausgeschlossen, wenn bereits die kontaktbehaftete Kontaktbelegung der ersten Kontakt-Schnittstelleneinrichtung mit der Kontaktbelegung einer kontaktlosen Kommunikationsprotokolls kollidiert. Dadurch wird die Verfügbarkeit eines Datenträgers für die kontaktlose Kommunikation sichergestellt.

Falls es sich bei der zweiten Schnittstelleneinrichtung um eine Kontaktlos-Schnittstelleneinrichtung handelt, ist die vorgenannte Prüfung nicht notwendig. Vielmehr wird dann eine Kollision der ersten kontaktbehafteten Kontaktbelegung und der kontaktlosen Kontaktbelegung von der Steuereinrichtung des Datenträgers geprüft. Die Steuereinrichtung erkennt eine Kontaktbelegung eines an dem Kontaktfeld anliegenden kontaktbehafteten Kommunikationsprotokolls und aktiviert die Kontaktlos-Schnittstelleneinrichtung und deren vorgegebene Kontaktbelegung nur dann, wenn die kontaktbehaftete Kontaktbelegung der ersten Kontakt-Schnittstelleneinrichtung nicht mit der vorgegebenen kontaktlosen Kontaktbelegung kollidiert, d. h., wenn es keine Überlappungen der beiden zu aktivierenden Kontaktbelegungen gibt.

Der oben beschriebene Prozess wird vorzugsweise beim Einschalten des tragbaren Datenträgers durchgeführt, d.h. im Rahmen seiner Initialisierungs- oder Hochfahrsequenz, bei der an dem Kontaktfeld anliegende Kommunikationsverbindungen geprüft werden. Die betreffenden Schnittstelleneinrichtungen werden von der Steuereinrichtung dann - nach Maßgabe der Ergebnisse der oben beschriebenen Kollisionsprüfungen - vorzugsweise sequenziell aktiviert. Die Kollisionsprüfungen werden durchgeführt, indem eine von dem Endgerät an einzelne Kontakte des Kontaktfelds angelegte Spannung überwacht wird und daraus eine Kontaktbelegung eines Kommunikationsprotokolls abgeleitet wird, die von der betreffenden Schnittstelleneinrichtung genutzt wird. Neben dem Erkennen der Kontaktbelegung eines kontaktbehafteten Kommunikationsprotokolls kann die Steuereinrichtung auch die Kontaktbelegung eines kontaktlosen Kommunikationsprotokolls prüfen und anhand einer Spannungsversorgung von bestimmten Kontakten erkennen. So kann beispielsweise das für die Nachfeldkommunikation einzusetzende kontaktlose SWP-Kommunikationsprotokoll ("Single Wire Protokoll") anhand einer Spannungsmodulation an dem C6-Kontakt des Kontaktfelds gemäß ISO 7816-2 erkannt werden, da ein SWP-Signal pulsbreitenmoduliert ist, im Gegensatz zu den Taktsignalen von kontaktbehafteten Kommunikationsprotokollen. Nachdem die Steuereinrichtung z.B. ein kontaktbehaftetes und ein kontaktloses Kommunikationsprotokoll erkannt hat, werden bei kollisionsfreien Kontaktbelegungen die Kontaktbelegungen beider Kommunikationsprotokolle aktiviert, so dass die entsprechenden Kontaktlos- bzw. Kontakt-Schnittstelleneinrichtungen eine kontaktlose und eine kontaktbehaftete Kommunikation über die entsprechenden Kommunikationsprotokolle gleichzeitig durchführen können.

Falls von einem Endgerät eine kontaktbehaftete Kommunikationsverbindung gemäß dem MMC-Kommunikationsprotokoll ("Multimedia Card") an das Kontaktfeld des Datenträgers angelegt wird, erkennt die Steuereinrichtung das MMC-Kommunikationsprotokoll anhand eines hohen Spannungspegels an dem C4-Kontakt und/oder dem C8-Kontakt des Kontaktfelds, der in der Initialisierungsphase des MMC-Kommunikationsprotokolls angelegt wird. Alternativ oder zusätzlich kann das MMC-Kommunikationsprotokoll auch dadurch erkannt werden, dass über den C4-Kontakt und/oder den C8-Kontakt ein bestimmtes MMC-Initialisierungssignal eingeht, z.B. das CMD1-Signal gemäß der Spezifikation MMC 4.1 des MMC-Kommunikationsprotokolls. Falls bei einer als erste Kontakt-Schnittstelleneinrichtung zu aktivierenden MMC-Schnittstelleneinrichtung darüber hinaus an dem C6-Kontakt des Kontaktfelds ein Taktsignal des MMC-Kommunikationsprotokolls erkannt wird, aktiviert die Steuereinrichtung die MMC-Schnittstelleneinrichtung mit der üblichen Kontaktbelegung des MMC-Kommunikationsprotokolls, die die Kontakte C4 und C8 sowie den Kontakt C6 für das Taktsignal des MMC-Protokolls verwendet. Eine Kontaktlos-Schnittstelleneinrichtung für ein kontaktloses Kommunikationsprotokoll, dessen Kontaktbelegung den Kontakt C6 verwendet, beispielsweise das SWP-Kommunikationsprotokoll, wird dann von der Steuereinrichtung deaktiviert bzw. nicht aktiviert, da andernfalls eine Kollision bezüglich des C6-Kontakts auftritt. Falls die Steuereinrichtung jedoch das Taktsignal des MMC-Protokolls an dem Kontakt C3 erkennt, kann gleichzeitig mit der MMC-Schnittstelleneinrichtung, die an dem C3-Kontakt das MMC-Taktsignal abgreift, auch eine Kontaktlos-Schnittstelleneinrichtung für ein kontaktloses Kommunikationsprotokoll über den Kontakt C6 aktiviert werden, beispielsweise das SWP-Kommunikationsprotokoll.

Falls die Steuereinrichtung nach dem Einschalten des Datenträgers ein an dem Kontaktfeld anliegendes kontaktbehaftetes ISO-Kommunikationsprotokoll erkennt, dessen Kontaktbelegung die Kontakte C2, C3 und C7 umfasst, kann eine ISO-Schnittstelleneinrichtung als erste Kontakt-Schnittstelleneinrichtung und beispielsweise die SWP-Schnittstelleneinrichtung mit dem Kontakt C6 als Kontaktlos-Schnittstelleneinrichtung aktiviert werden. Die Steuereinrichtung erkennt das ISO-Kommunikationsprotokoll beispielsweise daran, dass an dem Kontakt C3 ein Taktsignal anliegt und ein an dem Kontakt C2 anliegender Spannungspegel im Rahmen einer normalen Initialisierungssequenz der ISO-Schnittstelleneinrichtung von "niedrig" nach "hoch" bzw. 0 nach 1 geändert wird. Die Steuereinrichtung aktiviert dann die Kontakte C2, C3 und C7 für das ISO-Kommunikationsprotokoll.

Neben der ISO-Schnittstelleneinrichtung als erste aktivierte Kontakt-Schnittstelleneinrichtung (über die Kontakte C2, C3, C7) ist die prinzipiell mögliche Aktivierung einer MMC-Schnittstelleneinrichtung als zweite Schnittstelleneinrichtung für eine gleichzeitige Kommunikation über das MMC-Kommunikationsprotokoll (über C4, C6, C8) jedoch aufgrund der Bevorzugung der kontaktlosen SWP-Schnittstelleneinrichtung ausgeschlossen. Die MMC-Schnittstelleneinrichtung wird deshalb von der Steuereinrichtung nach der Aktivierung der ISO-Schnittstelleneinrichtung deaktiviert, so dass in jedem Fall parallel zu der Kommunikation über das ISO-Kommunikationsprotokoll eine kontaktlose Kommunikation über den Kontakt C6 möglich bleibt. Die Deaktivierung der MMC-Schnittstelleneinrichtung resultiert aus der Überlegung, dass der Kontakt C3 bereits für das Taktsignal des ISO-Kommunikationsprotokolls benötigt wird, so dass das Taktsignal des MMC-Protokolls nur noch an dem Kontakt C6 kollisionsfrei anliegen kann, der jedoch für eine kontaktlose Kommunikation freizuhalten ist.

Anhand einer an dem C6-Kontakt und/oder dem C8-Kontakt anliegenden entsprechend geringen oder Nullspannung erkennt die Steuereinrichtung, dass entweder kein kontaktbehaftetes Kommunikationsprotokoll oder das kontaktbehaftete USB-Hochgeschwindigkeitsprotokoll anliegt. Eine anliegende Kommunikationsverbindung gemäß dem USB-Protokoll kann die Steuereinrichtung alternativ auch anhand eines über den Kontakt C4 und/oder den Kontakt C8 eingehenden USB-Initialisierungssignals, z.B. gemäß der Spezifikation USB 1.0 des USB-Protokolls, erkennen. Die entsprechende USB-Schnittstelleneinrichtung kann also sowohl als erste als auch als zweite Kontakt-Schnittstelleneinrichtung aktiviert werden, ohne dass dadurch eine kontaktlose Kommunikation durch die SWP-Schnittstelleneinrichtung blockiert würde, da die USB-Kontaktbelegung die Kontakte C4 und C8 umfasst und somit die Aktivierung der, den Kontakt C6 der SWP-Schnittstelleneinrichtung blockierenden MMC-Schnittstelleneinrichtung, die ebenfalls C4 und C8 nutzt, prinzipiell ausgeschlossen ist. Somit ist beispielsweise eine (quasi-) parallele kontaktbehaftete Kommunikation gemäß dem ISO-Protokoll (C2, C3, C7), gemäß dem USB-Protokoll (C4, C8) und eine kontaktlose Kommunikation gemäß dem SWP-Protokoll (C6) möglich.

Die vorliegende Erfindung ermöglicht also, das kontaktlose SWP-Protokoll über den C6-Kontakt gleichzeitig mit zumindest einem kontaktbehafteten Kommunikationsprotokoll zu betreiben, z.B. mit dem MMC-Protokoll (über C3 für das Taktsignal und C4, C8), mit dem ISO-Protokoll (über C2, C3, C8) oder mit dem USB-Protokoll (über C4, C8). Falls über das Kontaktfeld des tragbaren Datenträgers bereits eine kontaktbehaftete Kommunikation über das ISO-Protokoll und eine kontaktlose Kommunikation über das SWP-Protokoll durchgeführt werden, kann theoretisch das USB-Protokoll noch zusätzlich aktiviert werden, nicht aber das MMC-Protokoll. Darüber hinaus ist auch das auf dem MMC-Standard basierende SD-Kommunikationsprotokoll zur kontaktbehafteten Kommunikation in die vorliegende Erfindung integrierbar.

Neben der kontaktlosen Nahfeldkommunikation über das SWP-Protokoll können auch andere Funkkommunikationen in die vorliegende Erfindung integriert werden, z.B. Kommunikationsprotokolle für RFID ("Radio Frequency Identification"), BlueTooth, WiFi ("Wireless Fidelity") und dergleichen, die wiederum individuelle Kontaktbelegungen des Kontaktfelds gemäß ISO 7816-2 verwenden können. Darüber hinaus ist es prinzipiell möglich, die vorliegende Erfindung auf beliebige mehrfeldrige Kontaktfelder als Kontaktschnittstellen zwischen Kommunikationsgeräten anzuwenden, um ein kontaktloses Kommunikationsprotokoll parallel mit kontaktbehafteten Kommunikationsprotokollen unter Vermeidung von Kollisionen zu betreiben. Die Erfindung ist jedoch bevorzugt für den Einsatz bei einem tragbaren Datenträger mit einem Kontaktfeld gemäß ISO 7816-2 zur Realisierung des kontaktlosen SWP-Protokolls neben anderen gängigen kontaktbehafteten Kommunikationsprotokollen geeignet. Als tragbare Datenträger kommen hier insbesondere Chipkarten, Mobilfunkkarten, sichere Massenspeicherkarten, USB-Tokens und dergleichen in Frage, die auch als tragbare Sicherheitsmodule bezeichnet werden können.

Weitere Merkmale und Vorteile der Erfindung ergeben sich aus der folgenden Beschreibung verschiedener erfindungsgemäßer Ausführungsbeispiele sowie weiterer Ausführungsalternativen im Zusammenhang mit den begleitenden Zeichnungen. Darin zeigen:
- Fig.1: eine Chipkarte mit einer erfindungsgemäßen Steuereinrichtung;
- Fig. 2: eine schematische Darstellung einer gleichzeitigen Aktivierung des MMC- und des SWP-Kommunikationsprotokolls;
- Fig. 3: Kontaktbelegungen bei gleichzeitiger Aktivierung eines ISO- und eines SWP- Kommunikationsprotokolls;
- Fig. 4: Kontaktbelegungen bei gleichzeitiger Aktivierung eines MMC- und eines SWP- Kommunikationsprotokolls; und
- Fig. 5: Kontaktbelegungen bei gleichzeitiger Aktivierung eines ISO-, eines USB- und eines SWP- Kommunikationsprotokolls.

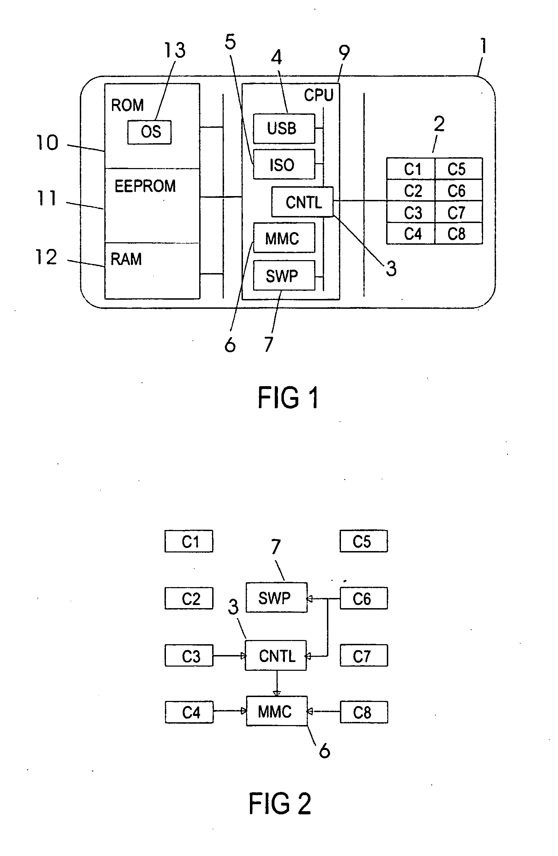

Das achtfeldrige Kontaktfeld gemäß ISO 7816-2 ist insbesondere dafür vorgesehen, bei Chipkarten, Smart Cards, Mobilfunkkarten und dergleichen über individuelle Kontaktbelegungen physikalische Schnittstellen für verschiedene Kommunikationsprotokolle bereitzustellen. Eine Chipkarte 1 mit einem solchen Kontaktfeld 2 ist in Figur 1 gezeigt. Das Kontaktfeld gemäß ISO 7816-2 besteht aus acht Kontakten C1 bis C8, wobei der Kontakt C1 für eine Versorgungsspannung (V+) der Chipkarte und der Kontakt C5 als Masse (GND) vorgesehen ist. Abhängig von dem jeweiligen Kommunikationsprotokoll, das ein mit der Chipkarte 1 in Kontakt stehendes Endgerät, beispielsweise ein Mobiltelefon, ein Bankterminal oder eine sonstige stationäre oder tragbare elektronische Kommunikationsvorrichtung, in einer Initialisierungs- oder Startphase der Chipkarte 1 vorgibt, werden bestimmte Kontaktbelegungen für die jeweiligen Kommunikationsprotokolle verwendet. Die Kommunikation wird dann von einer entsprechenden Schnittstelleneinrichtung 4-7 über aktivierte Kontaktbelegungen durchgeführt. Bei der Vielzahl von heute eingesetzten bzw. wünschenswerten Kommunikationsprotokollen besitzt das Kontaktfeld gemäß ISO 7816 nicht genug einzelne Kontakte, um beliebige Kommunikationsprotokolle gleichzeitig betreiben zu können.

Die Chipkarte 1 umfasst desweiteren einen Prozessor 9 (CPU), der ein Betriebssystem 13 (OS) der Chipkarte 1 und weitere Applikationen, z.B. die Schnittstelleneinrichtungen 4-7, ausführt, sowie eine Speicheranordnung, bestehend aus einem permanenten ROM-Speicher 10, einen nicht-flüchtigen EEPROM-Speicher 11 und einem flüchtigen RAM-Arbeitsspeicher 12.

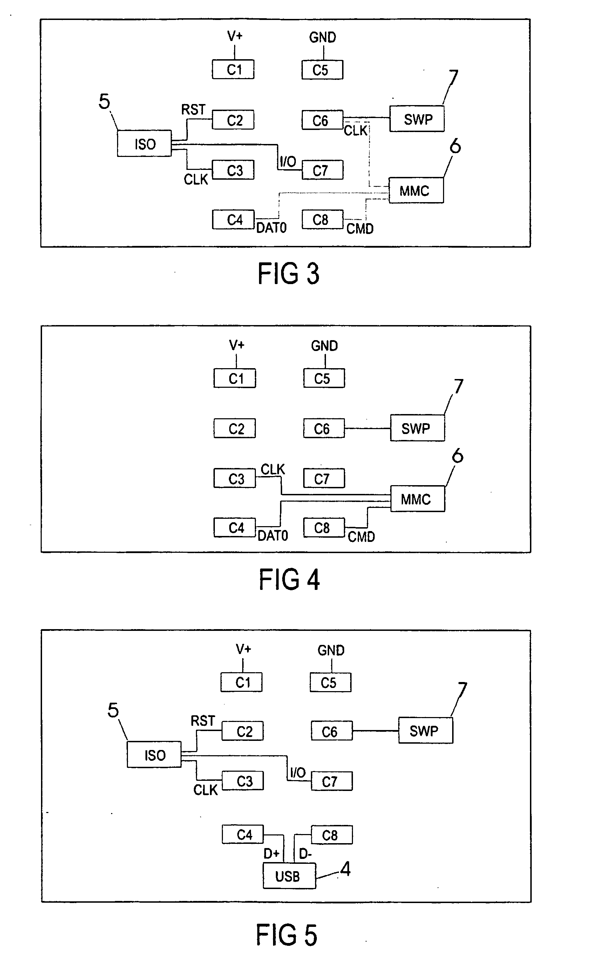

Ein gängiges Kommunikationsprotokoll für die Kommunikation über ein Kontaktfeld gemäß ISO 7816-2 ist das von einer ISO-Schnittstelleneinrichtung 5 bereitgestellte kontaktbehaftete ISO-Kommunikationsprotokoll, dessen Kontaktbelegung die Kontakte C2, C3 und C7 umfasst (vgl. Fig. 3 und 5). Darüber hinaus werden zunehmend die kontaktbehafteten Hochgeschwindigkeitsprotokolle MMC ("Multimedia Card") und USB ("Universal Serial Bus") eingesetzt, deren entsprechende Schnittstelleneinrichtungen 4, 6 eine Kommunikation über das MMC-Protokoll standardmäßig über die Kontakte C4, C6 und C8 und eine Kommunikation über das USB-Protokoll über die Kontakte C4 und C8 durchführen, so dass die Kontaktbelegungen der beiden Hochgeschwindigkeitsprotokolle USB und MMC bezüglich der Kontakte C4 und C8 kollidieren. Darüberhinaus können auch andere kontaktbehaftete Kommunikationsprotokolle eingesetzt werden, z.B. das auf dem MMC-Protokoll basierende SD-Protokoll, das bei SD-Speicherkarten ("Secure Digital Card") eingesetzt wird.

Neben diesen auf eine kontaktbehaftete Kommunikation abgestimmten Protokollen werden bei Chipkarten auch zunehmend Kommunikationsprotokolle für eine kontaktlose Kommunikation eingesetzt, die weitere Kontaktbelegungen des Kontaktfelds gemäß ISO 7816-2 beanspruchen. In diesem Zusammenhang sind insbesondere solche Kommunikationsprotokolle zu nennen, die bei der Nahfeldkommunikation der Chipkarte mit einem Endgerät über Funk- bzw. Hochfrequenzsignale eingesetzt werden. Beispielhaft für derartige kontaktlose Kommunikationsprotokolle wird nachfolgend von dem SWP-Protokoll ausgegangen, das den Kontakt C6 nutzt. Das erfindungsgemäße Prinzip kann aber unmittelbar auf jedes andere kontaktlose Kommunikationsprotokoll übertragen werden, über das ein tragbarer Datenträger, wie z. B. einer Chipkarte oder Smart Card, eine kontaktlose Kommunikation mit einem Endgerät, Terminal oder einer sonstigen Kommunikationseinrichtung durchführen kann. So können beispielsweise auch andere kontaktlose Kommunikationsprotokolle eingesetzt werden, z.B. solche, die auf eine Funkkommunikation über eine BlueTooth-Schnittstelle, über die WiFi-Technologie ("Wireless Fidelity") oder über RFID ("Radio Frequency Identification") abgestimmt sind.

Um eine möglichst hohe Verfügbarkeit der Chipkarte 1 im Hinblick auf eine kontaktlose Nahfeldkommunikation über das SWP-Protokoll sicherzustellen und zu ermöglichen, dass eine kontaktlose Kommunikation gemäß dem SWP-Protokoll gleichzeitig mit zumindest einer kontaktbehafteten Kommunikation gemäß einem der kontaktbehafteten Protokolle ausgeführt werden kann, umfasst die Chipkarte 1 eine Steuereinrichtung 3 (CNTL), die eine an einzelnen Kontakten des Kontaktfelds 2 anliegende Spannung prüft und daraus eines oder mehrere durch Endgeräte/Terminals vorgegebene Kommunikationsprotokolle ermittelt. Auf diese Weise erkennt die Steuereinrichtung 3 mögliche Kollisionen bezüglich einzelnen von verschiedenen Schnittstelleneinrichtungen - 4, 5, 6, 7 verwendeten Kontakten des Kontaktfelds 2 und aktiviert die entsprechenden Kontaktbelegungen so, dass neben einer aktiven Schnittstelleneinrichtung 4, 5, 6 zur kontaktbehafteten Kommunikation zumindest auch eine Schnittstelleneinrichtung 7 zur kontaktlosen Kommunikation aktiv sein kann. Dadurch wird insbesondere erreicht, dass der Kontakt C6, der von der SWP-Schnittstelleneinrichtung zur Nahfeldkommunikation benötigt wird, für das SWP-Protokoll zur Verfügung steht, so dass eine einheitliche Lösung zur Realisierung einer parallelen Nahfeldkommunikation mit einer Chipkarte 1 besteht. Die Steuereinrichtung 3 ermöglicht, dass die SWP-Schnittstelleneinrichtung 7 gleichzeitig mit zumindest einer der in Figur 1 gezeigten USB-, ISO-, MMC-Schnittstelleneinrichtungen 4, 5, 6 betrieben werden kann und sie von der Steuereinrichtung 3 gegenüber einer zweiten zu aktivierenden Kontakt-Schnittstelleneinrichtung 4, 5, 6 bevorzugt wird. Darüber hinaus ist es auch möglich, weitere Schnittstelleneinrichtungen und deren Protokolle, wie z. B. das kontaktbehaftete SD-Protokoll oder weitere kontaktlose Protokolle, über die Steuereinrichtung 3 kollisionsfrei zu aktivieren.

Die Kollisionsprüfung und kontrollierte Aktivierung durch die Steuereinrichtung 3 kann insbesondere im Zusammenhang mit den konkurrierenden Kontaktbelegungen des kontaktbehafteten MMC-Protokolls und des kontaktlosen SWP-Protokolls vorteilhaft eingesetzt werden. Hierzu führt die in Figur 2 gezeigte Steuereinrichtung 3 im Rahmen der Hochfahr-/Initialisierungssequenz beim Einschalten der Chipkate 1 eine adaptive Takterkennung an den Kontakten C3 und C6 durch, um zu ermitteln, ob an einem dieser Kontakte ein Taktsignal des MMC-Protokolls anliegt. Hierbei stellt das Endgerät/Terminal, das mit der Chipkarte 1 verbunden ist, sicher, dass in dieser Phase nur einer der beiden Kontakte C3 oder C6 ein Taktsignal führt und der andere einen konstanten Spannungspegel hat.

Zur Erkennung eines an dem Kontaktfeld 2 anliegenden MMC-Kommunikationsprotokolls prüft die Steuereinrichtung 3 zunächst die an dem Kontakt C4 und/oder C8 anliegende Versorgungsspannung. Wenn an einem oder beiden

Kontakten ein erhöhter Spannungspegel festgestellt wird, geht die Steuereinrichtung 3 von einem MMC-Protokoll aus. Ebenso geht die Steuereinrichtung 3 von einem anliegenden MMC-Protokoll aus, wenn über den Kontakt C8 ein CMD1-Signal eingeht, das gemäß der Spezifikation MMC 4.1 in der Initialisierungsphase des MMC-Protokolls gesendet wird.

Dadurch überprüft die Steuereinrichtung 3, ob der Takt für das MMC-Protokoll an C3 oder an C6 anliegt. Falls ein Taktsignal des MMC-Protokolls an dem Kontakt C3 anliegt, wird die MMC-Schnittstelleneinrichtung 6 mit der Kontaktbelegung C3, C4, C8 aktiviert. Der Kontakt C6 bleibt dann für die SWP-Schnittstelleneinrichtung 7 zur Kommunikation gemäß dem SWP-Protokoll frei, da der Kontakt C6 von dem MMC-Protokoll nicht beansprucht wird.

Wenn die MMC-Schnittstelleneinrichtung 6 als erste Kontakt-Schnittstelleneinrichtung von der Steuereinrichtung 3 aktiviert wird, wird der Kontakt, an dem das Taktsignal des MMC-Protokolls anliegt, fest als Taktquelle für die MMC-Schnittstelleneinrichtung 6 verwendet, solange eine Versorgungsspannung anliegt. Andere Kontakte, insbesondere der Kontakt C3 bei einem MMC-Taktsignal auf C6 oder der Kontakt C6 bei einem MMC-Taktsignal auf C3, können ab diesem Zeitpunkt für andere Protokolle verwendet werden. Wenn das MMC-Taktsignal an C3 erkannt wird, kann der Kontakt C6 für die SWP-Schnittstelleneinrichtung 7 aktiviert werden. Diese möglichen Kontaktbelegungen des MMC-Protokolls sind in den Figuren 3 und 4 dargestellt, in denen die Kontaktbelegung für das MMC-Protokoll den Takt (CLK) auf C3 (Fig. 4) bzw. C6 (Fig. 3, strichliniert) hat, auf C4 ein DATO-Signal und auf C8 ein CMD-Signal führt.

Ein anliegendes ISO-Kommunikationsprotokoll wird von der Steuereinrichtung 3 an einem am Kontakt C3 anliegenden Taktsignal erkannt, wobei die Abgrenzung zum MMC-Protokoll in einer Änderung des Spannungspegels am Kontakt C2 von 0 (niedrig) auf 1 (erhöht) im Rahmen der Initialisierungssequenz des ISO-Protokolls besteht. Die Steuereinrichtung 3 aktiviert dann die ISO-Schnittstelleneinrichtung 5 mit dem Kontakt C3 für den Takt (CLK), C2 für eine Reset-Leitung (RST) und C7 für eine Ein-/Ausgangsdatenleitung (I/O).

Figur 3 zeigt die Kontaktbelegungen einer gleichzeitig aktivierten kontaktbehafteten ISO-Schnittstelleneinrichtung und kontaktlosen SWP-Schnittstelleneinrichtung. Die übliche Kontaktbelegung des MMC-Protokolls mit dem Taktsignal auf C6 kollidiert zwar nicht mit derjenigen des ISO-Protokolls, wohl aber mit dem SWP-Protokoll, dessen Signal auf dem Kontakt C6 anliegt.

Figur 5 zeigt, dass ein gleichzeitiger Betrieb der ISO-Schnittstelleneinrichtung 5, der USB-Schnittstelleneinrichtung 4 sowie der SWP-Schnittstelleneinrichtung 7 möglich ist, da diese drei Protokolle wechselseitig unterschiedliche Kontaktbelegungen verwenden. Das USB-Protokoll führt bei seiner Initialisierungssequenz auf C4 und C8 eine Nullspannung, durch die das USB-Protokoll von dem MMC-Protokoll unterschieden werden kann, welches auf diesen Kontakten einen erhöhten Spannungspegel führt. Durch die Nullspannung auf C4 und/oder C8 oder durch spezielle USB-Initialisierungssignale auf C4 (D+) oder C8 (D-) im Rahmen der USB-Initialisierungssequenz wird ein an dem Kontaktfeld 2 anliegendes USB-Protokoll von der Steuereinrichtung 3 erkannt und die USB-Schnittstelleneinrichtung 4 aktiviert. Da die Kontaktbelegung der USB-Schnittstelleneinrichtung 4 mit derjenigen der MMC-Schnittstelleneinrichtung 6 kollidiert und somit eine zusätzliche Aktivierung der MMC-Schnittstelleneinrichtung 6 nicht möglich ist, bleibt der Kontakt C6 für das SWP-Protokoll frei. Die USB- und die ISO-Schnittstelleneinrichtung 4, 5 können also gleichzeitig aktiviert sein, da keine dieser beiden Kontakt-Schnittstelleneinrichtungen den Kontakt C6 benötigt und insofern eine kontaktlose Kommunikation der Chipkarte 1 mit einem Terminal weiterhin möglich bleibt.

Ein an dem Kontaktfeld 2 anliegendes SWP-Protokoll ist grundsätzlich anhand einer Spannungsmodulation an dem Kontakt C6 erkennbar, da im Gegensatz zu den ansonsten am Kontakt C6 anliegenden Taktsignalen von kontaktbehafteten Protokollen, wie z.B. dem MMC-Protokoll, das SWP-Signal pulsbreitenmoduliert und insofern von einem Taktsignal unterscheidbar ist. Auf diese Weise kann die Steuereinrichtung 3 auch eine ausschließliche Aktivierung der SWP-Schnittstelleneinrichtung 7 vornehmen, falls kein kontaktbehaftetes Kommunikationsprotokoll anliegt, z.B. wenn die Stromversorgung des Endgeräts nicht funktioniert und die Stromversorgung der Chipkarte 1 über einen Nahfeldkommunikations-Controller erfolgt.

## Patentansprüche

1. Verfahren zum Aktivieren von Kontaktbelegungen an einem Kontaktfeld (2) eines tragbaren Datenträgers (1), umfassend die folgenden Schritte in dem tragbaren Datenträger:
- Aktivieren einer ersten Kontaktbelegung in Reaktion auf ein an dem Kontaktfeld (2) anliegendes erstes Kommunikationsprotokoll, wobei das erste Kommunikationsprotokoll von den Kontakten des Kontaktfeldes (2) einen ersten Teil belegt und wobei für den nicht durch die erste Kontaktbelegung belegten zweiten Teil des Kontaktfeldes (2) eine zweite und eine dritte Kontaktbelegung aktivierbar sind;
- Aktivieren der zweiten Kontaktbelegung in Reaktion auf ein an dem Kontaktfeld (2) anliegendes zweites Kommunikationsprotokoll bei gleichzeitig aktivierter erster Kontaktbelegung;
**gekennzeichnet durch**,
- Reservieren von zumindest einem Kontakt, bei aktivierter erster Kontaktbelegung, aus dem zweiten Teil der Kontakte des Kontaktfeldes (2) für die dritte Kontaktbelegung; und
- Prüfen auf eine Kollision der zweiten Kontaktbelegung mit der Reservierung, wobei das Aktivieren der zweiten Kontaktbelegung in Reaktion auf ein an dem Kontaktfeld (2) anliegendes zweites Kommunikationsprotokoll erfolgt, wenn der Schritt des Prüfens keine Kollision ergibt.

2. Verfahren nach Anspruch 1, **dadurch gekennzeichnet, dass** in dem Schritt des Prüfens eine Kollision erkannt wird, wenn der reservierte zumindest eine Kontakt durch die zweite Kontaktbelegung belegt werden würde.

3. Verfahren nach einem der Ansprüche 1 bis 2, **dadurch gekennzeichnet, dass** in dem Schritt des Prüfens eine Kollision erkannt wird, wenn der reservierte zumindest eine Kontakt durch eine von außerhalb des Datenträgers vorgegebene Kontaktbelegung belegt werden würde.

4. Verfahren nach einem der Ansprüche 1 bis 3, **dadurch gekennzeichnet, dass** durch die Reservierung des zumindest einen Kontaktes einer Instanz auf dem tragbaren Datenträger, die über die erste Kontaktbelegung Daten austauscht, die Möglichkeit aufrechterhalten wird, weitere Daten über die dritte Kontaktbelegung auszutauschen.

5. Verfahren nach einem der Ansprüche 1 bis 4, **dadurch gekennzeichnet, dass** die Reservierung entsprechend einer Vorgabe erfolgt, die in dem tragbaren Datenträger gespeichert ist.

6. Verfahren nach Anspruch 5, **dadurch gekennzeichnet, dass** die Reservierung durch die Erfüllung einer in der Vorgabe enthaltenen Bedingung ausgelöst wird.

7. Verfahren nach einem der Ansprüche 1 bis 6, **dadurch gekennzeichnet, dass** der Schritt des Reservierens in Antwort auf eine Reservierungsanforderung einer Anwendung, die über die erste Kontaktbelegung Daten austauscht, durchgeführt wird.

8. Verfahren nach einem der Ansprüche 1 bis 7, **dadurch gekennzeichnet, dass** die Reservierung in Antwort auf eine Freigabeanforderung einer Anwendung, die über die erste Kontaktbelegung Daten austauscht, aufgehoben wird.

9. Verfahren nach einem der Ansprüche 1 bis 8, **dadurch gekennzeichnet, dass** die Reservierung für einen begrenzten Zeitraum aufrechterhalten wird, der kleiner ist als ein Zeitraum der Aktivierung der ersten Kontaktbelegung.

10. Verfahren zum Aktivieren einer vorgegebenen Kontaktbelegung eines kontaktlosen Kommunikationsprotokolls an einem Kontaktfeld (2) gemäß ISO 7816-2 eines tragbaren Datenträgers (1), umfassend die Schritte nach einem der Ansprüche 1 bis 9, wobei das erste Kommunikationsprotokoll ein kontaktbehaftetes Kommunikationsprotokoll ist **dadurch gekennzeichnet, dass** für den Fall, dass das an dem Kontaktfeld anliegende zweite Kommunikationsprotokoll ein zweites kontaktbehaftetes Kommunikationsprotokoll ist, die Kontaktbelegung des zweiten kontaktbehafteten Kommunikationsprotokolls nur dann als zweite Kontaktbelegung aktiviert wird, wenn die Kontaktbelegung des zweiten kontaktbehafteten Kommunikationsprotokolls nicht mit der vorgegebenen Kontaktbelegung des kontaktlosen Kommunikationsprotokolls kollidiert.

11. Verfahren nach Anspruch 10, **dadurch gekennzeichnet, dass**, für den Fall, dass das zweite Kommunikationsprotokoll das kontaktlose Kommunikationsprotokoll ist, dessen vorgegebene Kontaktbelegung nur dann als zweite Kontaktbelegung aktiviert wird, wenn die vorgegebene Kontaktbelegung nicht mit der Kontaktbelegung des ersten kontaktbehafteten Kommunikationsprotokolls kollidiert.

12. Verfahren nach Anspruch 10 oder 11, **gekennzeichnet durch** den Schritt des Erkennens einer Kontaktbelegungen eines an dem Kontaktfeld (2) anliegenden Kommunikationsprotokolls **durch** Überwachen einer Spannungsversorgung von bestimmten Kontakten (C3, C4, C6, C8) des Kontaktfelds (2) nach dem Einschalten des tragbaren Datenträgers (1).

13. Verfahren nach Anspruch 12, **gekennzeichnet durch** den weiteren Schritt des Erkennens der Kontaktbelegung eines kontaktlosen SWP-Kommunikationsprotokolls anhand einer Spannungsmodulation an dem C6-Kontakt des Kontaktfelds (2), vor dem Schritt des Aktivierens.

14. Verfahren nach Anspruch 12 oder 13, **dadurch gekennzeichnet, dass** die Kontaktbelegung eines kontaktbehafteten MMC-Kommunikationsprotokolls anhand eines an dem C4-Kontakt und/oder dem C8-Kontakt des Kontaktfelds (2) anliegenden vorgegebenen Spannungspegels und/ oder Initialisierungssignals des MMC-Kommunikationsprotokolls erkannt wird.

15. Tragbarer Datenträger (1) welcher Mittel umfasst, die angepasst sind zur Ausführung eines Verfahrens nach Anspruch 1 bis 14.

## Claims

1. A method for activating contact assignments on a contact pad (2) of a portable data carrier (1), comprising the following steps in the portable data carrier:
activating a first contact assignment in reaction to a first communication protocol present at the contact pad (2), the first communication protocol being assigned to a first portion of the contacts of the contact pad (2), and a second and a third contact assignment being activatable for the second portion of the contact pad (2) not assigned by the first contact assignment;
- activating the second contact assignment in reaction to a second communication protocol present at the contact pad (2), while the first contact assignment is simultaneously activated;
**characterized by**
- reserving at least one contact from the second portion of the contacts of the contact pad (2) for the third contact assignment while the first contact assignment is activated; and
- checking for a collision of the second contact assignment with the reservation, the activation of the second contact assignment being effected in reaction to a second communication protocol present at the contact pad (2) when the checking step yields no collision.

2. The method according to claim 1, **characterized in that** in the checking step a collision is recognized when the reserved at least one contact would be assigned by the second contact assignment.

3. The method according to either of claims 1 to 2, **characterized in that** in the checking step a collision is recognized when the reserved at least one contact would be assigned by a contact assignment preset from outside the data carrier.

4. The method according to any of claims 1 to 3, **characterized in that** the reservation of the at least one contact of an instance on the portable data carrier, said instance exchanging data via the first contact assignment, maintains the possibility of exchanging further data via the third contact assignment.

5. The method according to any of claims 1 to 4, **characterized in that** the reservation is effected according to a setting which is stored in the portable data carrier.

6. The method according to claim 5, **characterized in that** the reservation is triggered by the fulfillment of a condition contained in the setting.

7. The method according to any of claims 1 to 6, **characterized in that** the reserving step is carried out in response to a reserve request of an application exchanging data via the first contact assignment.

8. The method according to any of claims 1 to 7, **characterized in that** the reservation is suspended in response to a release request of an application exchanging data via the first contact assignment.

9. The method according to any of claims 1 to 8, **characterized in that** the reservation is maintained for a limited period which is smaller than a period of activation of the first contact assignment.

10. A method for activating a preset contact assignment of a contactless communication protocol on a contact pad (2) according to ISO 7816-2 of a portable data carrier (1), comprising the steps according to any of claims 1 to 9, the first communication protocol being a contact-type communication protocol, **characterized in that** in the event that the second communication protocol present at the contact pad is a second contact-type communication protocol, the contact assignment of the second contact-type communication protocol is only activated as a second contact assignment when the contact assignment of the second contact-type communication protocol does not collide with the preset contact assignment of the contactless communication protocol.

11. The method according to claim 10, **characterized in that** in the event that the second communication protocol is the contactless communication protocol, the preset contact assignment thereof is only activated as a second contact assignment when the preset contact assignment does not collide with the contact assignment of the first contact-type communication protocol.

12. The method according to claim 10 or 11, **characterized by** the step of recognizing a contact assignment of a communication protocol present at the contact pad (2) by monitoring a voltage supply of certain contacts (C3, C4, C6, C8) of the contact pad (2) after the switch-on of the portable data carrier (1).

13. The method according to claim 12, **characterized by** the further step of recognizing the contact assignment of a contactless SWP communication protocol by a voltage modulation at the C6 contact of the contact pad (2), before the activating step.

14. The method according to claim 12 or 13, **characterized in that** the contact assignment of a contact-type MMC communication protocol is recognized by a preset voltage level present at the C4 contact and/or the C8 contact of the contact pad (2) and/or initialization signal of the MMC communication protocol.

15. A portable data carrier (1) comprising means that are adapted for executing a method according to claims 1 to 14.

## Revendications

1. Procédé d'activation d'affectations de contact dans un champ de contact (2) d'un support de données portable (1), comprenant les étapes suivantes dans le support de données portable:
- activation d'une première affectation de contact en réaction à un premier protocole de communication présent au champ de contact (2), le premier protocole de communication occupant une première partie des contacts du champ de contact (2) et une deuxième et une troisième affectation de contact étant activables pour la deuxième partie du champ de contact (2) non occupée par la première affectation de contact;
- activation de la deuxième affectation de contact en réaction à un deuxième protocole de communication présent au champ de contact (2), la première affectation de contact étant en même temps activée;
**caractérisé par**
- réservation d'au moins un contact de la deuxième partie des contacts du champ de contact (2) pour la troisième affectation de contact, la première affectation de contact étant activée, et
- vérification pour reconnaître s'il y a collision entre la deuxième affectation de contact et la réservation, l'activation de la deuxième affectation de contact ayant lieu en réaction à un deuxième protocole de communication présent au champ de contact (2) quand l'étape de la vérification ne décèle aucune collision.

2. Procédé selon la revendication 1, **caractérisé en ce qu'**une collision est reconnue lors de l'étape de la vérification quand le au moins un contact réservé serait occupé par la deuxième affectation de contact.

3. Procédé selon une des revendications de 1 à 2, **caractérisé en ce qu'**une collision est reconnue lors de l'étape de la vérification quand le au moins un contact réservé serait occupé par une affectation de contact prédéfinie à partir de l'extérieur du support de données.

4. Procédé selon une des revendications de 1 à 3, **caractérisé en ce que**, par la réservation du au moins un contact d'une instance qui, sur le support de données portable, échange des données par l'intermédiaire de la première affectation de contact, la possibilité d'échanger d'autres données par l'intermédiaire de la troisième affectation de contact est maintenue.

5. Procédé selon une des revendications de 1 à 4, **caractérisé en ce que** la réservation a lieu selon une spécification qui est mémorisée dans le support de données portable.

6. Procédé selon la revendication 5, **caractérisé en ce que** la réservation est déclenchée par l'accomplissement d'une condition comprise dans la spécification.

7. Procédé selon une des revendications de 1 à 6, **caractérisé en ce que** l'étape de la réservation est effectuée en réponse à une demande de réservation d'une application qui échange des données par l'intermédiaire de la première affectation de contact.

8. Procédé selon une des revendications de 1 à 7, **caractérisé en ce que** la réservation est annulée en réponse à une demande de libération d'une application qui échange des données par l'intermédiaire de la première affectation de contact.

9. Procédé selon une des revendications de 1 à 8, **caractérisé en ce que** la réservation est maintenue durant un laps de temps limité qui est inférieur à un laps de temps de l'activation de la première affectation de contact.

10. Procédé d'activation d'une affectation de contact prédéfinie d'un protocole de communication sans contact à un champ de contact (2) selon ISO 7816-2 d'un support de données portable (1), comprenant les étapes selon une des revendications de 1 à 9, le premier protocole de communication étant un protocole de communication avec contact, **caractérisé en ce que**, dans le cas où le deuxième protocole de communication présent au champ de contact est un deuxième protocole de communication avec contact, l'affectation de contact du deuxième protocole de communication avec contact n'est activée en tant que deuxième affectation de contact que quand l'affectation de contact du deuxième protocole de communication avec contact n'entre pas en collision avec l'affectation de contact prédéfinie du protocole de communication sans contact.

11. Procédé selon la revendication 10, **caractérisé en ce que**, dans le cas où le deuxième protocole de communication est le protocole de communication sans contact, son affectation de contact prédéfinie n'est activée en tant que deuxième affectation de contact que quand l'affectation de contact prédéfinie n'entre pas en collision avec l'affectation de contact du premier protocole de communication avec contact.

12. Procédé selon la revendication 10 ou 11, **caractérisé par** l'étape de la reconnaissance d'une affectations (sic) de contact d'un protocole de communication présent au champ de contact (2) par surveillance d'une alimentation en tension de certains contacts (C3, C4, C6, C8) du champ de contact (2) après l'enclenchement du support de données portable (1).

13. Procédé selon la revendication 12, **caractérisé par** l'étape supplémentaire de la reconnaissance de l'affectation de contact d'un protocole de communication SWP sans contact au moyen d'une modulation de tension au contact C6 du champ de contact (2), avant l'étape de l'archivage.

14. Procédé selon la revendication 12 ou 13, **caractérisé en ce que** l'affectation de contact d'un protocole de communication MMC avec contact est reconnue au moyen d'un niveau de tension prédéfini présent au contact C4 et/ou au contact C8 du champ de contact (2) et/ou au moyen d'un signal d'initialisation du protocole de communication MMC.

15. Support de données portable (1) qui comprend des moyens qui sont adaptés à l'exécution d'un procédé selon revendication 1 à 14.
